# EUROPEAN PATENT SPECIFICATION

(11) **EP 2 355 451 B1**
(45) Date of publication and mention of the grant of the patent: **09.01.2013**
(21) Application number: 10152301.7
(22) Date of filing: 01.02.2010
(51) Int. Cl.: H04L 29/08

(54) **Distributed maritime surveillance system**
Verteiltes Meerüberwachungssystem
Système distribué de surveillance maritime

(43) Date of publication of application: 10.08.2011
(73) Proprietor: THALES NEDERLAND B.V., 7550 GD Hengelo (NL)
(72) Inventor: Laarhuis, Jan, 7534 PA, ENSCHEDE (NL)
(74) Representative: Nguyen Van Yen, Christian

(56) References cited:
- ANONYMOUS: "Distributed Surveillance System" Workshop on Counter Piracy Equipment and Technologiesat NATO Headquarters, 4 June 2009 4 June 2009 (2009-06-04), pages 1-14, XP002595332 Retrieved from the Internet: URL:http://www.nato.int/structur/AC/141/pd f/S-B/THALES.pdf [retrieved on 2010-08-04]
- GREEN D B ET AL: "IPV6 sensor service oriented architecture" MILITARY COMMUNICATIONS CONFERENCE, 2008. MILCOM 2008. IEEE, IEEE, PISCATAWAY, NJ, USA, 16 November 2008 (2008-11-16), pages 1-6, XP031408120 ISBN: 978-1-4244-2676-8
- SYCARA K ET AL: "Information discovery and fusion: semantics on the battlefield" INFORMATION FUSION, 2003. PROCEEDINGS OF THE SIXTH INTERNATIONAL CONFE RENCE OF JULY 8-11, 2003, PISCATAWAY, NJ, USA,IEEE, vol. 1, 8 July 2003 (2003-07-08), pages 538-544, XP010676487

## Description

The present invention relates to the maritime surveillance application domain. It is a concern for government bodies, international organisations, commercial entities which operate maritime lines, and regular or occasional passengers as well, to be able to be reassured that navigation can be considered safe and secure. Different types of systems have been designed and deployed to this effect. Defence forces use coastal defence systems. Civilian authorities use Vessel Traffic Management Information Systems (VTMIS). Concepts common to these systems, even if their implementation may be different are: i) the use of sensors, mostly long range radars positioned on high points along the coast; ii) an operations centre which receives sensor data and presents them to operators; iii) intervention means the use of which may be decided by the human operators.
But indeed, long range radars are costly to acquire, install, maintain and reposition. This last drawback renders a traditional maritime surveillance system difficult to reconfigure, for instance to obtain a better coverage in case of evolving threats. It is also a limitation of radars that they are good at detecting objects, but no so good at classifying and identifying objects. This may not be a problem where the surveillance system has only to deal with cooperative objects, which have normally to operate an Automatic Identification System (AIS) whereby they will permanently communicate to the VTMIS operations centre their identity, position and other data. It is a significant problem where non-cooperative objects try do deceive the surveillance system which makes it all the more necessary to correlate various sources of identification. There is a need then for a more versatile maritime surveillance system based on a different sensors architecture, which provides a solution to these problems by replacing the long range radars of the prior art by a number of low cost sensors positioned at sea. Also, new types of threats have become prevalent in specific areas such as the Gulf of Aden where pirates attack commercial vessels to capture their payloads or their crew to hold them to ransom. The international community has decided to address this specific threat by deploying observation and intervention means. There is a need then for very versatile means to cope with the evolving threat which can take various forms: rapid vessels which hide on the coast; previously hijacked high sea vessels; single vessels or convoys, etc...The observation means must then be rapidly reconfigurable within fairly large areas, be equipped with low cost sensors which provide data fused to produce local as well as global operational pictures and early detection of threatening objects to enable sufficient response time for the intervention means.
A previous patent application (PCT/EP2009/060455) owned by the same applicant has addressed this problem by providing Sensors in Concert (SinC) systems. This latter invention is now improved to integrate the sensors in concert in a complete Observation Orient Decide Act (OODA) loop within a Command Control Communications Computers Intelligence Surveillance Reconnaissance (C4ISR) system with improved modularity, scalability and reconfiguration capabilities, most notably by providing a Distributed Surveillance System (DSS) based on modules which can be deployed and communicate between themselves, with an Operation Centre (OC) or with response platforms.

Part of the these features have been disclosed in a document entitled "Distributed Surveillance System", (Workshop on Counter Piracy Equipment and Technologies at NATO Headquarters, June 4th, 2009) But this document does not disclose a solution to the problem of automatically forming a collaborative surveillance entity with a group of nodes which are configured to subscribe/unsubscribe to data as a function of at least ranges defined around said nodes, which greatly improves the operational capability of the surveillance system of the invention.

For this purpose, the present invention provides a distributed surveillance system comprising a group of at least a first and a second node each comprising at least two sensors, a reference module, a processing and storage module and a communication module, said system being characterised in that said communication module is configured to run a publish/subscribe process whereby said first node is configured to publish data for use by at least said second node and to subscribe to data published by at least said second node and in that said processing module is configured to produce a local operational picture from said first node data and/or a group operational picture from at least some of the subscribed local/group data stored in said processing and storage module from said communication module. Moreover, said at least first and second nodes are configured to automatically form a collaborative surveillance entity and subscribe/unsubscribe to data as a function at least of ranges defined around said nodes.
Advantageously, each node comprises at least two sensors selected from a group comprising a radar, an AIS, an EO sensor, a passive sonar, a Sound Direction Finder, a Radio Direction Finder and an Electronic Support Measures (ESM).
Advantageously, one of the nodes is borne by an USV platform. Advantageously, said USV platform is a catamaran equipped with a telescopic mast bearing at least an aerial sensor and a telescopic stem bearing at least a sonar sensor 1030b, 1030c).
Advantageously, said telescopic mast and said telescopic stem are retracted when said catamaran is in transport mode and are jointly deployed by a coupling mechanism before said sensors operate in observation mode. Advantageously, said system is fit to be in communication with a command and control system to command and control response capabilities. Advantageously, said communication module comprises a LOS and a NLOS link.
Advantageously, in said publish/subscribe process, data are conveyed from data producing nodes to data consuming nodes by following a one-to-one or a one-to-many delivery tree.
Advantageously, in that said processing and storage module is further configured to run an intention detection process whereby independent pieces of evidence are fused to compute the likelihood of a hypothesis. Advantageously, said intention detection process uses a rule-based anomaly detection sub-process to compute said pieces of evidence.
Advantageously, said pieces of evidence are input into a causal reasoning sub-process based on Bayesian networks said causal reasoning sub-process running in the processing and storage module of one first node is configured to receive as input the local likelihood (860) from at least a second node and produces as output of the Bayesian network of the collaborative estimation of said first node, the group likelihood of a hypothesis.
Advantageously, said group of nodes is configured to be in communication with a hierarchical structure of other groups through group gateways.

It is also an object of the invention to provide use scenarios of the DSS, which corresponds, to different Concepts of Operations (CONOPS).

For this purpose, the present invention provides a distributed surveillance method comprising a group of at least a first and a second observation processes, said processes each comprising at least two sensing sub-processes, a referencing sub-process, a computing and storage sub-process and a communication sub-process, said method being characterised in that, in said communication sub-process, said first observation process publishes data for use by at least said second observation process and can subscribe to data published by at least said second observation process and in that said processing sub-process produces a local operational picture from data output by said first observation process and/or a group operational picture from at least some of the data subscribed from the group stored by said processing and storage sub-process from said communication sub-process. Moreover, at least first and second nodes are configured to automatically form a collaborative surveillance entity and subscribe/unsubscribe to data as a function at least of ranges defined around said nodes.
Advantageously, at least some of the observation processes run on a subset of a group of vessels to be protected which navigate in an unprotected convoy.
Advantageously, at least some of the observation processes run on a subset of a group of vessels to be protected and on protection vessels which sail in convoy.
Advantageously, at least some of the observation processes run on vessels to be protected and on protection vessels each navigating in an area of responsibility.
Advantageously, at least some of the observation processes run on vessels to be protected which navigate in a corridor, on protection vessels each sailing in an area of responsibility and on fixed platforms positioned in the corridor.
Advantageously, at least some of the observation processes are configured to use as input data from a plurality of nodes.
Advantageously, at least some of said plurality of nodes subscribe to the data output by the observation processes of at least some of the other nodes among said plurality of nodes.
Advantageously, at least some of said plurality of nodes feed data as input to a observation process of one single node among said plurality of nodes.

Another advantage of the invention is that it provides optimal match between required and available response time. Also, the system will offer minimum deployment cost due to the election of Commercial Off-The Shelf (COTS) equipment. The system has also the advantage to implement a publish/subscribe paradigm on a network the topology of which may be automatically reconfigured while the nodes are moving. The nodes may be organised in a hierarchical structure of groups of nodes. The system is capable of running cooperative intention detection processes to compute the likelihood of a threat. One of the key advantages of the invention is to provide low cost distributed observation platforms, which deliver early warning thus allowing for a reduced number of response platforms. In addition, the system of the invention provides improved reconnaissance capability by allowing the possibility to include Electro Optic (EO) cameras at the surveillance nodes. Said EO cameras can be borne by unmanned platforms such as Unmanned Aerial Vehicles (UAV) or Unmanned Surface Vehicles (USV). A USV specifically advantageous for this purpose is a catamaran like-platform supporting a number of sensors fit for surveillance on an extensible (above water) mast and extensible (underwater) stem.

The invention will be better understood and its various features and advantages will be made more apparent from the description here below of some of the possible embodiments and from the appended drawings, among which:
- Figure 1 represents the general architecture of a DSS integrated in a C4ISR in a preferred embodiment of the invention;
- Figure 2 represents the architecture of a DSS in a preferred embodiment of the invention;
- Figures 3a and 3b represent two types of a sensor box of a DSS in preferred embodiments of the invention;
- Figure 4 represents the communications layers of a DSS in a preferred embodiment of the invention;
- Figures 5a and 5b illustrate the operation of the communications in a DSS in a preferred embodiment of the invention;
- Figure 6 illustrates the inter-node operation of the communications in a DSS in a preferred embodiment of the invention;
- Figures 7a, 7b and 7c illustrate three modes of distributing execution of applications over a group of Boxes in a DSS in an embodiment of the invention;
- Figures 8 illustrates a mode of distributing execution of applications of applications in an intention detection process in a DSS in an embodiment of the invention;
- Figure 9 illustrates the operation of an intention detection process in a DSS in an embodiment of the invention;
- Figure 10a, 10b and 10c represent three views of an Unmanned Surface Vehicle for use as a surveillance platform in an embodiment of the invention;
- Figures 11 a and 11 b illustrate the cooperation of boxes organised in groups in an embodiment of the invention;
- Figure 12 illustrates a first CONOPS for use of a DSS in an embodiment of the invention;
- Figure 13 illustrates a second CONOPS for use of a DSS in an embodiment of the invention;
- Figure 14 illustrates a third CONOPS for use of a DSS in an embodiment of the invention;
- Figure 15 illustrates a fourth CONOPS for use of a DSS in an embodiment of the invention;
- Figure 16 illustrates the second CONOPS of figure 13 in an embodiment where the C2 platforms carry helicopters;
- Figure 17 illustrates a fifth CONOPS for use of a DSS in an embodiment of the invention;
- Figure 18 illustrates a first example of a zoning approach by a DSS in an embodiment of the invention;
- Figure 19 illustrates a second example of a zoning approach by a DSS in an embodiment of the invention;
- Figure 20 illustrates a third example of a zoning approach by a DSS in an embodiment of the invention.

In the specification, claims and drawings, the abbreviations and acronyms have the meaning indicated in the table below, except if otherwise mentioned in the text.

| **Abbreviation** | **Meaning** |
|---|---|
| AD | Ad-hoc Distribution module |
| AHRS | Attitude Heading Reference System |
| AIS | Automatic Identification System |
| AoR | Area of Responsibility |
| BF | Beam Forming antenna |
| BU | Buoy |
| C2 | Command and Control |
| C4ISR | Command Control Communications Computers Intelligence Surveillance Reconnaissance |
| COP | Common Operational Picture |
| COTS | Commercial Off The Shelf |
| DIFAR | Directional Frequency And Ranging |
| DSS | Distributed Surveillance System |
| E | Evidence |
| EO | Electro Optic module |
| ESM | Electronic Support Measures |
| FIC | Fast Intercept Craft |
| GG | Group Gateway |
| GNSS | Global Navigation Satellite System |
| GPS | Global Positioning System |
| HBW | Hiqh Bandwidth radio |
| HDSR | High Definition Surveillance Radar |
| HF | High Frequency radio |
| HIDAR | High Instantaneous Dynamic Ranging |
| HVU | Hiqh Value Unit |
| IGMP | Internet Group Management Protocol |
| IMO | International Maritime Organisation |
| IRTC | International Recommended Transit Corridor |
| LAN | Local Area Network |
| LOS | Line Of Sight |
| MANET | Mobile Ad-hoc NETwork |
| MMSI | Maritime Mobile Service Identity |
| MPA | Maritime Patrol Aircraft |
| MSS | Maritime Safety and Security |
| NIC | Network Interface Card |
| NLOS | Non Line Of Siqht |
| NM | Nautical Mile |
| NVIS | Near Vertical Incident Skywave antenna |
| OC | Operation Centre |
| PS | Passive Sonar module |
| PubSub | Publish Subscribe |
| QoS | Quality of Service |
| RD | Radar sensor |
| RDF | Radio Direction Finder |
| RE | Reference module |
| RF | Radio frequency |
| S | Sensor |
| SA | Situation Awareness |
| SAP | Session Announcement Protocol |
| SDF | Sound Direction Finder |
| SDP | Session Description Protocol |
| SF | Sensor and Fusion module |
| SinC | Sensors in Concert |
| UAV | Unmanned Aerial Vehicle |
| USV | Unmanned Surface Vehicle |
| VTMIS | Vessel Traffic Management Information System |
| VTS | Vessel Traffic Services |
| WAN | Wide Area Network |

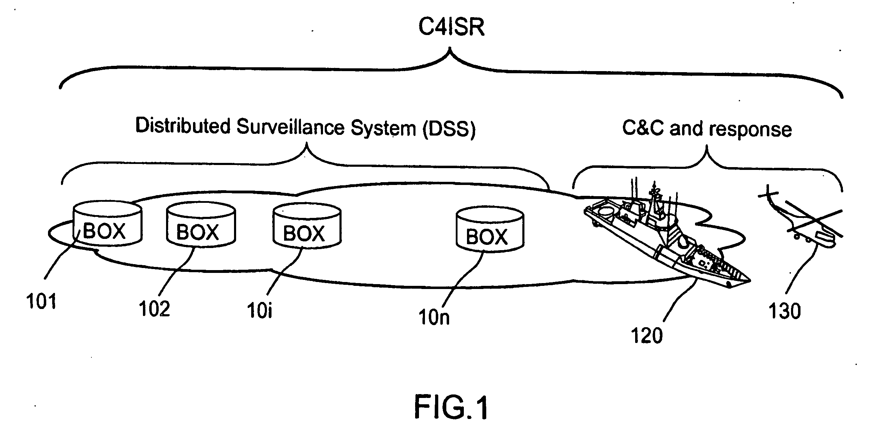

Figure 1 represents the general architecture of a DSS integrated in a C4ISR in a preferred embodiment of the invention.
In the description, we will use the words "DSS" (Distributed Surveillance System") to designate a surveillance system according to the invention. Sensors in Concert (SinC) is a surveillance system of the type described in the above mentioned patent application (PCT/EP2009/060455). Its extended surveillance capabilities can be used in combination with C2- and response capabilities to form a C4lSR system suitable to support Maritime Protection missions.

DSS provides continuous and complete surveillance of primarily surface objects in a potentially large maritime Area of Responsibility (AoR). 'Continuous and complete surveillance' means that 100% of the AoR is observed 100% of the time. Such a capability is desirable for Maritime Protection missions, but is difficult to realise. Current approaches to continuous and complete surveillance are either inadequate, expensive, or both:
- surveillance by means of satellite imaging is intermittent instead of continuous, may not meet the required performance, and is expensive for certain applications;
- surveillance by means of Maritime Patrol Aircrafts (MPA) is partial and intermittent, and is expensive for certain applications;
- using the sensors and tactical link systems of multiple warships for surveillance of areas larger than individual warships can cover is prohibitively expensive when complete surveillance is required.
The building blocks to create the extended surveillance capability are called Boxes. These Boxes must be positioned on suitable platforms, which are geographically distributed over the AoR. Each Box has the following capabilities:
- sensing its surroundings up to a limited range;
- communication with its neighbour Boxes;
- fusion of sensing data from all Boxes.

Eligible platforms for Boxes include pylons, spar-buoys or Unmanned Surface Vehicles (USV). But also Boxes can 'piggyback' on platforms such as commercial ships and oilrigs. The platform's primary task is to position the Box at sufficient height so that the optical horizon corresponds with the sensing range. Appropriate spatial deployment of the platforms results in continuous and complete coverage of the AoR by the sensing capabilities of the Box. An appropriate spatial deployment exists for any AoR, irrespective of its form and/or the presence of islands in the AoR. The combination of platform and Box will be called a DSS-node or a node in the sequel. A DSS thus consists of a number of nodes.

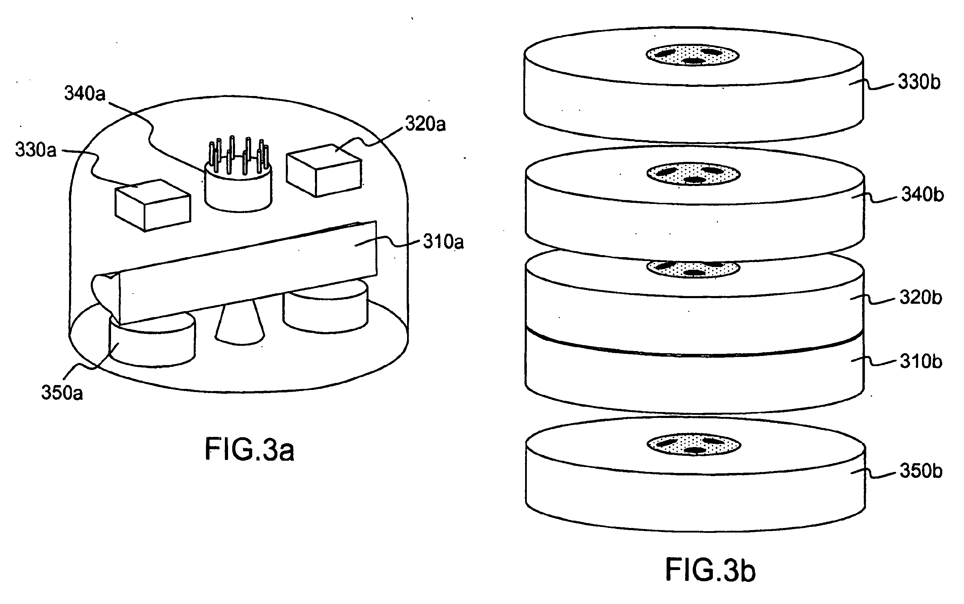

Generally speaking, a DSS-based C4lSR system is created when C2 and response capabilities are connected to the extended surveillance capability of DSS. The C2 capability can 'tap' data from the extended surveillance capability irrespective of its position in the AoR. In case the C2 capability consists of more than one platform, each of them can 'tap' from the extended surveillance capability precisely the data that pertains to its sub-area. DSS-based C4lSR systems have the premise of being more cost efficient than current C4lSR approaches. This is enabled by the physical decoupling of the surveillance and response capabilities from the platforms they are implemented on. The surveillance capability is implemented on as many as needed platforms, which can be as cheap as possible. The size of the AoR and the sensing range of the Boxes will determine the number of platforms for surveillance. The response capability is implemented on as few as possible, usually expensive, platforms. The required response time and the velocity of the response platform determine the number of response platforms required in the system.
This is one of the elements which differentiate the system of the invention from systems of the prior art wherein surveillance and reconnaissance capabilities are borne by the response means, thus making the system much more expensive to deploy and operate.
In an embodiment of the invention, a DSS comprises at least two Boxes, 101, 102, 10i...10n (see Figure 1). As will be explained further in the description, a DSS in preferred embodiments of the invention will be configured to cover an AoR with adequate coverage to provide sufficient response time for the response means.
The structure of a Box can be modular: in this case, a Box comprises a number of modules selected to be tailored to a specific mission. The preferred structure and composition of the Boxes will be explained in the comments to figure 3 hereunder. Some Boxes may be configured to play the role of an operation centre (OC), which controls the operations of a number of other nodes. Spar-buoys bearing a Box can be of the specific type disclosed by international patent application n °PCT/EP/2009/06045 assigned to the same applicant.
A C4lSR will also comprise one or more C2 platforms, 120, with response capabilities, 130. C2 platforms may be frigates that carry helicopters for response. Frigates are expensive means and are not available in large numbers in the zones where the piracy attacks are prevalent. Frigates can be replaced by Fast Intercept Crafts (FICs), which are less expensive.

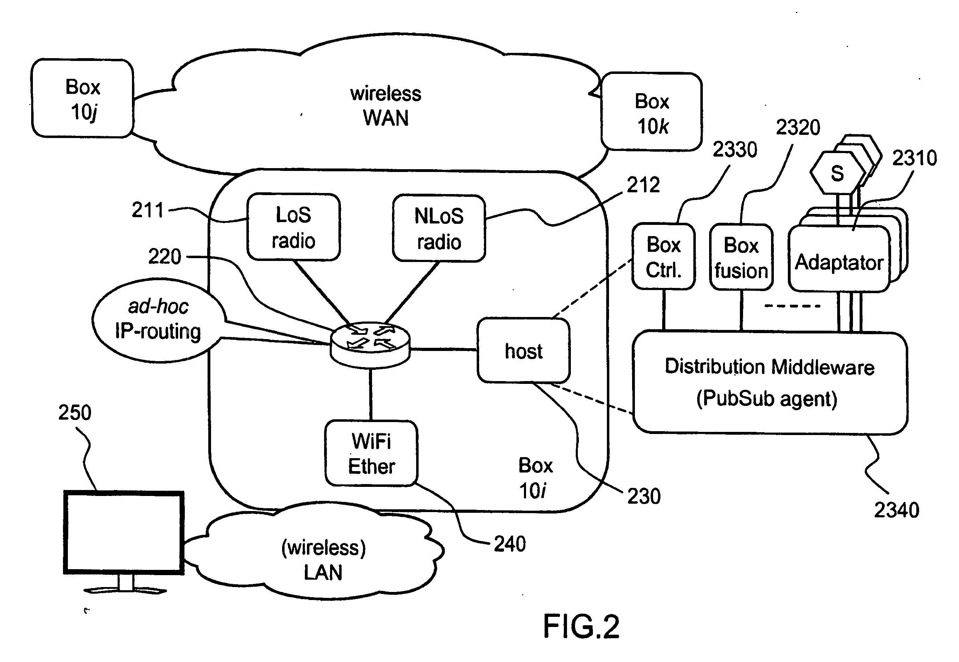

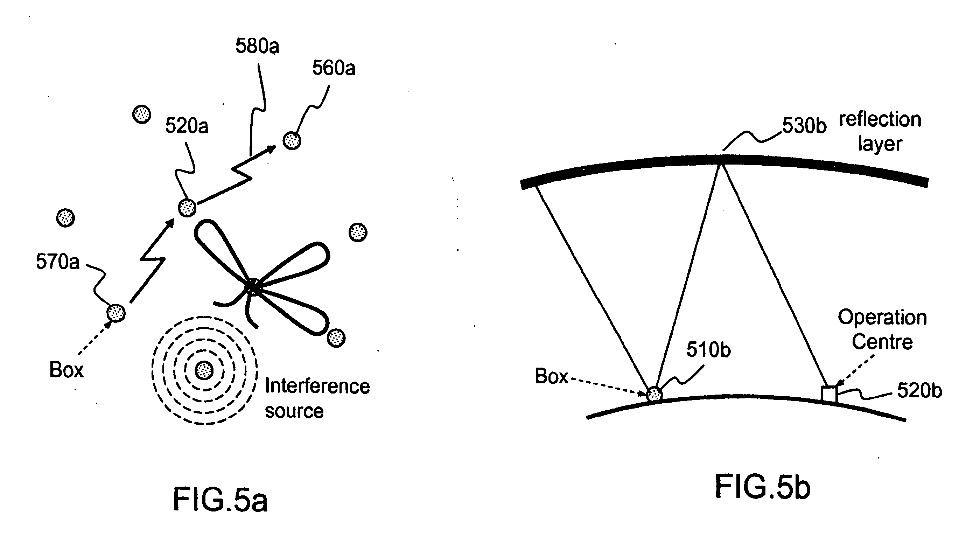

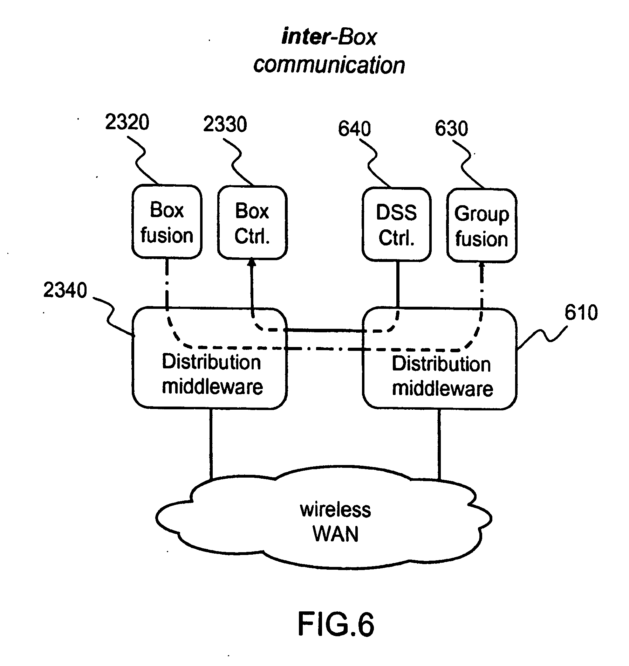

Figure 2 represents the architecture of a DSS in a preferred embodiment of the invention.
As displayed on figure 2, a Box 10i is connected to Box 10j and Box 10k by a wireless WAN (Wide Area Network). It can be connected to any other Box within range. There can be two types of radio connections: a Line Of Sight (LOS) connection, 211, and a Non Line Of Sight (NLOS) connection, 212, which are illustrated on figures 5a and 5b respectively. Due to the anticipated height of the Boxes of approximately 15 meter, the LOS extends to approximately 15km. The NLOS radio may have a covered range of about 100 km, limited by the available power and antenna configuration. A router, 220, performs the IP routing functions of the Box. The storage device in the router includes a database of the network topology, which is configured to allow, among other functions, performance of the specific handover functions, which are important for an optimised coverage of the AoR, as will be explained further down in the description. Specifically, the topology database comprises the absolute coordinates of nodes and is updated in real time. A host processor and storage device, 230, is connected to the router and comprises at least the following processes:
- An Adaptation module, 2310, which receives the signals of the sensors of the local Box; sensors will generally comprise a radar, possibly an AIS (Automatic Identification System) and optionally an EO camera and/or a Passive Sonar, and/or Sound Direction Finder (SDF), a Radio Direction Finder (RDF), an Electronic Support Measures (ESM). Furthermore, a GPS and Attitude Heading Reference System (AHRS) provide the time and spatial references of the Box. Pre processing is performed to format signal data in a manner which is consistent with the structure of the data model of the system (i.e., coordinate frame transformation; data rate adaptation; filtering; etc...); said model will be explained later;
- A Box fusion module, 2320, which performs fusion of information (instant position or track data from local and/or remote sensors and, possibly, non instant data, such as intelligence reports); the fusion processes will be explained in detail further down in the description;
- A Box control module, 2330, which controls the operations of the Box (power consumption, configuration and maintenance data, etc...);
- A Distribution middleware module, 2340, where a Publish/Subscribe (Pub/Sub) agent runs so that the processes executed on a definite Box declare which data it wants to receive; specific comments on this Pub/Sub agent are provided in relation to figure 6.
These modules can be implemented on different physical processors and memory units or on a single processor with a single memory unit, depending on the load in the context of the application.
The router, 220, is also connected wired or wirelessly to a Local Area Network (LAN) of the platform, when present. An Operations Centre (OC) may be connected to the Box, or simple display functionalities, both referred to under numeral 250.

Figures 3a and 3b represent two types of a Box of a DSS in preferred embodiments of the invention.
A first type of Box is represented on figure 3a. In a Box of this type, all modules are integrated in a single structure, with no possibility to easily decide to reconfigure the Box according to the specificities of a definite mission. Typically, its dimensions will be smaller than 1,50m diameter and less than 1,0 m height. Said Box will possibly comprise:
- A rotating radar, 310a;
- An Automatic Identification System, 320a;
- A GPS and AHRS module, 330a;
- A radio and networking module, 340a;
- A processing and storage module, 350a.
The Box may comprise other sensors like an EO camera and/or a Passive Sonar, and/or Sound Direction Finder (SDF), a Radio Direction Finder (RDF), an Electronic Support Measures (ESM), etc...
Radar wise, a preferred embodiment will include low-cost radar scanners, 310a, with short detection range (typically less than 20 NM), reduced bearing resolution (typically between 3 and 6°) and no Doppler processing. This will allow for a much lower system cost. These radars are normally used for leisure boating. Their performance on an individual basis would hardly have any merit to be considered for security and safety applications but cooperation within a cluster of nodes and with other sensors within the same Box increases performance more than cost. Radar vendors having such catalogue products usable as radar elements in the system are Garmin™, Furuno™, Raymarine™, Navico™... Radar signal processing may be accomplished using a COTS solution such as the Sigma-S6 board from Rutter™. The main feature needed is detection of objects within sea-clutter, and therefore advanced sea-clutter processing is needed.
An AIS is a cooperative identification system developed at the initiative of the International Maritime Organisation which has set standards with compulsory identification rules and equipment geared at controlling this identification. An AIS, 320a, comprises an RF transponder which may regularly broadcast in allocated frequency bands carrying formatted data. Range will depend on the height of the AIS sensor. A first part of the data is static and entered manually, such as: the Maritime Mobile Service Identity (MMSI) - a 9 digits unique identifier of on-board RF equipments, IMO number, call sign and name, length and beam, location of position fixing antenna on the ship. A second part of the data is dynamic input and is collected automatically by the AIS, mostly from Global Navigation Satellite System (GNSS) data: ship's position with accuracy indication and integrity status, position time stamp, course and speed over ground, heading, rate of turn, navigational status (such as Not Under Command or NUC, at anchor, etc...), with optional additional data on angle of heel, pitch, roll and additional on-board sensors data. A third part relates to voyage data and is at master's discretion or as required by competent authority: ship's draught, hazardous cargo (type and other data, as required by competent authority), destination, Estimated Time of Arrival (ETA), waypoints and, optionally, route plan (last field not provided in basic message).
The GPS and AHRS module, 330a, is built from COTS equipments (a standard GPS receiver, possibly delivering augmented precision position coordinates and velocities, and a compass delivering bearing and attitude information. In a variant, GPS and compass data may be fused so that the readings of both equipments can be calibrated for improved precision. This will be done only when it brings accuracy improvements, which is not the case for relatively slow surface objects. Position data is necessary to feed the network topology database, which is used, amongst others, to implement the handover functionalities of the system according to the invention.
The Radio and Networking module, 340a, and Processing module, 350a, have already been commented upon in relation with figure 2.

In a variant of the invention which can be viewed on figure 3b, a Box is composed of a number of modules which can be included or not according to the definite requirements of a node to accomplish a specific mission. In this implementation, the Box may comprise:
- An Ad-hoc Distribution (AD) module, 310b, which includes a Processing and storage sub module, a Radio and Networking sub module, a Box Control sub module and a Distribution middleware, which have been described hereinabove in relation to figure 2;
- A Sensor and Fusion (SF) module, 320b, which includes a radar sub module, a Box Adaptation sub module and a Box Fusion sub module, which have been described hereinabove in relation to figure 2;
- A Reference (RE) module, 330b, which has been described hereinabove in relation to figure 3a;
- An Electro-Optical (EO) module, 340b, which includes one or more cameras which cover a part of the AoR of the node where it is positioned; possible COTS EO cameras are available for instance from Axis™ (Q6032-E), Sony™ (SNC-RXS70P) or Panasonic™ (WV-NW964);
- A Passive Sonar (PS) module, 350b; like radars, sonars used in a system of the invention are preferably COTS product; there are well-known COTS sonars which are used on buoys platforms; passive examples are the DIFAR (Directional Frequency And Ranging) or the HIDAR (High Instantaneous Dynamic Ranging). For instance a DIFAR sonar may have a cylindrical array of hydrophones and samples acoustic signals based on bearing and frequency (from 5 Hz to 2.400 Hz typically); active sonobuoy products can also be considered; the same type of sonars can be used or other types known to the man skilled in the art, depending on the velocity of the platform and the definite mission.
A Box of this type is further described in European patent application No.EP10152280.3, filed the same day by the same applicant. A specific advantage of such a Box is that the various modules can be assembled very easily through specific connectors positioned on the top and bottom of each module which allow plug and play mechanical, power and network connections. Thanks to this specific connection device, the modules of the Box can all use the power supplied by the platform and can all be integrated in the LAN of the platform.
The dimensions of the modules are less than 1,5 m diameter and vary in height from 0,2-0,5m.

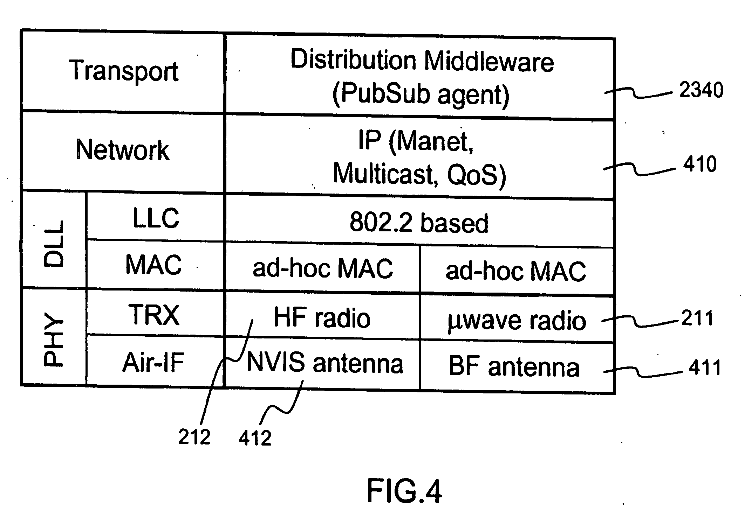

Figure 4 represents the communications layers of a DSS in a preferred embodiment of the invention. At the left the protocol layering well-known to those skilled in the art is shown. At the right the stack of the preferred embodiment is shown.
The structure of the protocol layers is an important feature of the invention, which characterises a Mobile Ad-hoc NETwork (MANET) according to an embodiment of the invention and is now described.
The transport layer is implemented by the publish-subscribe middleware, 2340, in the Processing and storage module, which has been described hereinabove in connection with figure 2.

The network layer is IP-based and requires the following capabilities, 410:
- MANET routing which manages the incoming and outgoing nodes which join and leave the network as they move in or out the range of the link;
- Multicast capabilities, specifically Source Specific Multicast (SSM), which manage the subscription functionality of the receiving nodes, the multicast routing resulting in delivery trees in the network, and multicast forwarding of packet from senders to receivers;
- Quality of Service (QoS) capabilities based on the priority of the messages and corresponding queuing of them.
The datalink layer consists of two sub-layers: the Logical Link Control sublayer will be based on the well-known 802.2 standard, and for the MAC a protocol is selected specifically tailored to ad-hoc networks. There are two MAC solutions, each tailored to the radio interface they are connected to. The physical layer for NLOS communication comprises a HF radio with frequency allocation, 212, connected to a Near Vertical Incident Skywave (NVIS) or simpler skywave antenna, 412. The LOS communication solution consists of a microwave radio, 211, connected to a Beam Forming (BF) antenna, 411.

Figures 5a and 5b illustrate the operation of the communications in a DSS in a preferred embodiment of the invention.
Figure 5a illustrates the operation of LOS radios in a DSS. A node, 510a, has 3 peers, 520a, 530a, 540a located within range of the BF antenna of the LOS radio, to which radiated power is focussed in beams for purpose of communication. The BF-antenna locks the beam to the peers as long as they are within LOS. This property is beneficial both when the peers move, and when the node's orientation w.r.t. northerly changes. When an interference source, 550a, exist within LOS, the BF antenna minimizes the reception of radiation in that direction, as shown by the null in the direction of the interference source in Figure 5.a. When a node, 560a, is not within range of the LOS radio of node 570a, the communication takes place with node 520a as a relay. Obviously, when more than one relay is needed, similar approaches apply.
Figure 5b illustrates the operation of a NLOS radio of a node 51 0b which can communicate with the OC, 520b, through the reflection layer, 530b.

Figure 6 illustrates the inter-node operation of the communications in a DSS in a preferred embodiment of the invention.
Another important feature of the system of the invention is to provide a canonical mechanism to distribute execution of applications over a group of Boxes of the DSS, a group being at least two Boxes of the DSS and at most all Boxes of the DSS. This mechanism contains the following three parts:
1. local execution- The application is executed within a single Box;
2. distribution - The results of the local execution is distributed to interested other Boxes. Interest is explicitly indicated by these Boxes by means of subscription to these results.
3. group execution - The application is executed at group scope, with results of the local execution as input.

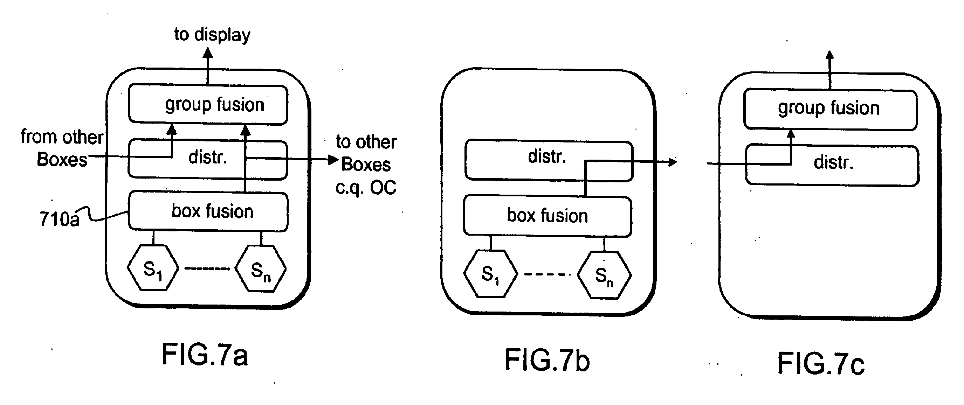

This canonical mechanism is applied to kinematic fusion and to information fusion. The application to kinematic fusion is shown in figure 7a.
The local execution is the fusion of sensor data at Box level, resulting in local surveillance picture. The group execution is the fusion of the local pictures of a group of Boxes into a group surveillance picture. Boxes can have either or both of two roles: Feeder and Collector. In figure 7a the situation is shown in which a Box has both roles. In Figure 7b the situation is shown in which a Box has only the Feeder role, and in Figure 7c the Box has only the Collector role.
The local execution is performed by the Box Fusion process, 2320, based on data captured by the Box' sensors, and processed in the adaptation process, 2310. The group execution is performed by a Collector, which collects the local fusion data, sent by all Feeders, to which the Collector has subscribed, and inputting it into a Group Fusion module, 630. Data is transferred from the Feeders to the Collector through Distribution middleware, 2340, 610, which communicate through the wireless WAN (LOS or NLOS radio links as explained hereinabove).

Data flows are controlled by Box Control module, 2330 and DSS Control module, 640. Both local execution and group execution of kinematic fusion is performed using algorithms known to the man skilled in the art, an example of which is given within the comments in relation to figures 7a.
The Pub/Sub agent is capable of allowing a node to subscribe to certain data. A process for performing publication/subscription in a preferred manner used in this invention is described in European patent application No.EP1 0152278.7 filed this same day by the same applicant. The publishing node may announce to be published data using the Session Description Protocol (SDP) and/or the Session Announcement Protocol (SAP). Preferably, the step of subscribing to data of interest to the node is performed by using the Internet Group Management Protocol (IGMP).

Kinematic fusion processes are processes whereby a single Box, acting on a stand alone basis or acting as a Collector from information possibly provided by multiple Feeders, compute a surveillance picture which provides information on tracks of targets computed from multiple sensors and/or multiple Boxes. The surveillance picture, possibly supplemented with non real time data, such as information reports, will result in a Common Operational Picture or a COP to be displayed locally or at Collector level.

In figure 7a, a group kinematic fusion process of a system according to the invention is illustrated. A Collector, 710a, performs a local fusion in its Box Fusion process, 2320, from the Box sensors S₁...Sₙ, using algorithms known to the man skilled in the art. This Collector receives information from other Boxes through its Distribution middleware, 610. It then performs group fusion in its Group Fusion process, 630 from the output of the Box Fusion module, 2320, and of the other Boxes.
The allocation of roles (Feeder, Collector) to Boxes allows for selection of a centralised or a distributed mode of operation: In a centralised mode, all Boxes within a group contribute their information to a Collector Box which processes it all and either displays locally a common surveillance/full operational picture or transfers it to an OC. In a distributed mode, all Boxes use the information of all the Boxes in the group to compute and display locally common surveillance/full operational picture.

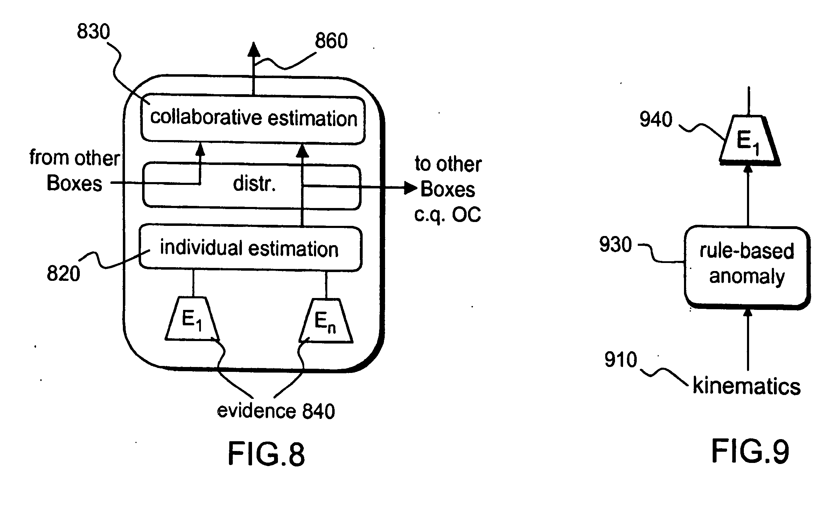

In figure 8 the canonical mechanism is applied to information fusion or Intention Detection, which is a process whereby the likelihood of a presumed intention of a suspect object related to a track, called a hypothesis, is determined using a probabilistic approach. The fusion processes in this application are therefore called estimation. The local execution is performed by the Individual estimation process, 820, which fuses so-called evidence, whose availability is further discussed hereunder, and outputs the local likelihood of a pre-defined hypothesis, for example the occurrence of a piracy attack on an object. The group execution is performed by the Collaborative estimation process, 830, with the local likelihood of neighbouring Boxes as input evidence, and with the group likelihood of a hypothesis as output.
The evidence E₁...Eₙ play the same role in intention detection as the sensors do in the kinematic fusion. Each individual element Eᵢ is individually and independently produced. The Individual Estimation process, 820, and the Collaborative Estimation process, 830, are also described further down in relation with figure 8 and figure 9.

Intention detection may be useful for counter-piracy missions in which High Value Units (HVU) must be protected against piracy attacks. Useful pictures of the crew and their potential weapons of a suspect target may serve as evidence, 940, for the individual estimation process, 820. Kinematic information (local surveillance picture), 910, serves as evidence, 940, after being processed, for example by a rule-based anomaly engine, 930. Based on a set of rules which are included in this rule-based anomaly engine, a set of possible events are determined. An example of a rule-based anomaly engine is disclosed by the European patent application published under n°EP2081163 which is assigned to the applicant of the instant application. As disclosed in said application, different abnormal behaviours can be detected by engine 930 from various inputs: validity check of AIS information; violation of an alert area, a warning area, a keep out area; kinematics investigation; history footprint evaluation; tactical risk analysis; deviation from route plan; trade pattern analysis; rendez-vous recognition; reaction elicit; deviation from standard track. As an output of engine 930, Evidence, 940, is gathered. In a stand alone Box, this is then processed by a causal reasoning engine of the individual estimation process, 820. Said causal reasoning engine is best implemented, in a preferred embodiment of the system of the invention, using probabilistic models, for instance Bayesian networks. In a Bayesian network approach tailored for computing probabilities of events conditional upon a set of evidence, belief propagation algorithms are implemented in a manner, which is known to the man skilled in the art to calculate the likelihood, 860, of a hypothesis. In the system of the invention though, the Bayesian network of the causal reasoning engine can be fed with soft-evidence, being the local likelihoods, each calculated by and retrieved from a number of collaborative Boxes. This causal reasoning engine then performs the collaborative estimation 830. Using Boxes positioned on different platforms, said Boxes being composed of different sensors, will greatly improve the diversity and independence of the data input into the collaborative Bayesian network and, therefore, the reliability of group likelihood, 860.

As explained hereinabove, intention detection of an object is preferably implemented in a DSS according to the invention. The likelihood of predefined hypothesis intentions is calculated by the causal reasoning component using various forms of evidence as input. Of particular importance is the evidence obtained by visual inspection of suspect objects. Such visual inspection is generally called reconnaissance, which can be included within DSS. It is implemented in various ways, two of which are described below. In both situations it is assumed that, based on their kinematic behavior as detected by sensors of the DSS, an object (the adversary) is suspected of threatening another object (the victim) under protection of the system.
In a first embodiment EO-cameras are included in Boxes. The Boxes completely or partly surrounding an adversary can take snapshots when the adversary is within range of the EO-camera. As such, snapshots of the suspect object from different aspect angles are available as evidence, which is input to the intention detection capability. Though this embodiment is relatively simple, a possible drawback is the relatively short distance between the adversary and the victim at which reconnaissance is possible. The counterpart of this short distance for reconnaissance is the need of a very short response time and hence a dense cover of the AoR by response means, and high deployment and operation costs.
In a second embodiment the potential drawback of the first is relieved at the expense of additional complexity. In this embodiment an Unmanned Aerial Vehicle (UAV) platform with an EO-camera exists specifically for reconnaissance purposes. Using UAVs it is possible to take snapshots from an adversary from a much larger distance from the victim. The UAV is of a hand-launched type so that it is able to launch it from relatively small response platforms like Fast Intercept Crafts (FIC). Recovery of such UAVs is possible by sea landing. Though the launching platform may be far from the location of the adversary, the UAV will be part of the DSS network because it will always be connected to the Box that tracks the adversary. At a height of up to hundred meters and being quiet, the UAV can covertly take snapshots from the adversary. These snapshots are routed through the DSS network to provide evidence, which is input to the intention detection capability.

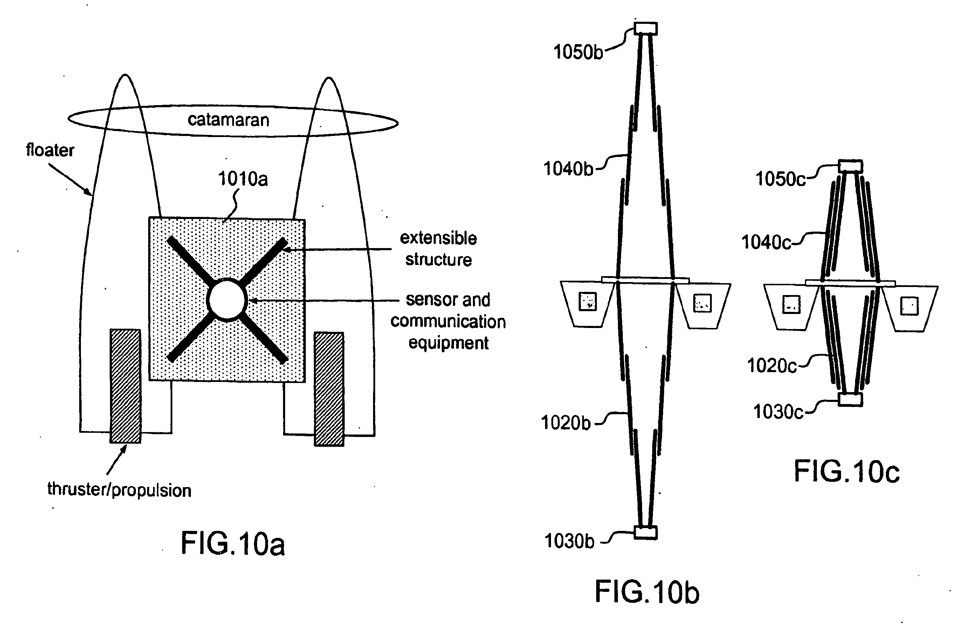

Figure 10a, 10b and 10c represent three views of an Unmanned Surface Vehicle for use as a projection surveillance platform in an embodiment of the invention.
For surveillance, and possibly reconnaissance, an embodiment of particular interest in the context of the current invention is a specific Unmanned Surface Vehicle (USV) as a platform for a Box. USVs are interesting platforms for their unmanned and therefore cheap operation with long uninterrupted operational shifts. In general, USVs are not of interest as a platform for sensors, and thus also for DSS, because of the relatively small height that the sensors can be positioned at. Higher positioning of the sensors renders the USV unstable in its pitch movement, which hampers severely sensor operation. In the present invention, USVs are modified to incorporate an inventive physical structure, which positions the sensor and communication equipment at the appropriate positions, and also provides the required pitch stability. For instance a catamaran 1010a can be modified to include an extensible stem, 1020b, 1020c, and an extensible mast, 1040b, 1040c.

The physical structure enables extension into the water, known as the extensible stem, 1020b, 1020c. This positions a sonar sensor 1030b, 1030c (PS-module) at the appropriate depth, and provides stability to the platform as a whole by applying a ballast weight to the lowest part of the extensible stem. The physical structure further enables extension into the air, known as the extensible mast, 1040b, 1040c. This positions the Box, 1050b, 1050c at the appropriate height. The stem and the mast consist of 3-4 sections of 3-4m each, so that the extended length corresponds to the height and depth as used with other platforms. There are various mechanisms to extend the mast, which are all well known to those skilled in the art. Possible mechanisms include telescoping the segments and unfolding the segments. Simultaneous extension of the stem and the mast is achieved by coupling the extension mechanisms of the stem and the mast. A possible coupling mechanism uses gravity, i.e., when the stem is released the weight of the ballast at the same time drags the telescopic segments of the stem downwards and may at the same time send hydraulic pressure upwards to deploy the telescopic segments of the mast. Said physical structure can only be coupled when it can freely extend both into the water and into the air. The floater structure and hull of most USVs prevents such coupled extension. Due to the space between its floaters, this is not the case of a catamaran, which proves to be an excellent platform for such a physical structure. When the USV is in transport mode, the stem and the mast are retracted. In this situation, the depth and height do not hamper the sailing of the USV. When at its intended/programmed position, the USV goes in observation mode and the stem and mast are extended. In transport mode the platform resembles the dynamic behavior of a normal USV, while in observation mode it resembles the much better dynamic behavior of a spar buoy. When compared to spar-buoy platforms, advantages of this catamaran USV platform are:
- easier deployment: USVs autonomously, or under control of another platform, sail to the designated area for surveillance;
- no mooring needed: the USV remains at the intended geo-position without mooring by using its propulsion system; such USV can operate in waters of arbitrary depth;
- less vulnerable: in the case of an imminent threat, the USV may decide autonomously or under control of another platform, to sail away from the threat; in particular; the USV will sail in the direction of the closest response platform, if present in the C4ISR system.

Of interest is the possibility to use the EO module of the Box carried by an UAV/USV to confirm by direct visual inspection the information about a potential threat in the area where the UAV/USV is sent. The data from the EO module and the other modules of the Box on board the UAV/USV can then be input in the collaborative intention detection module of a group of nodes associated to the projection platform, thus greatly increasing reliability of detection and reconnaissance and the available response time. When allocating missions and corresponding sensors to a specific platform, though, consideration must be made regarding the maintenance of an EO camera when operational for more than a couple of days on a platform. Due, among others, to the corroding effect of the saline environment on the cameras' objectives, the EO-module may not function well during a service interval.

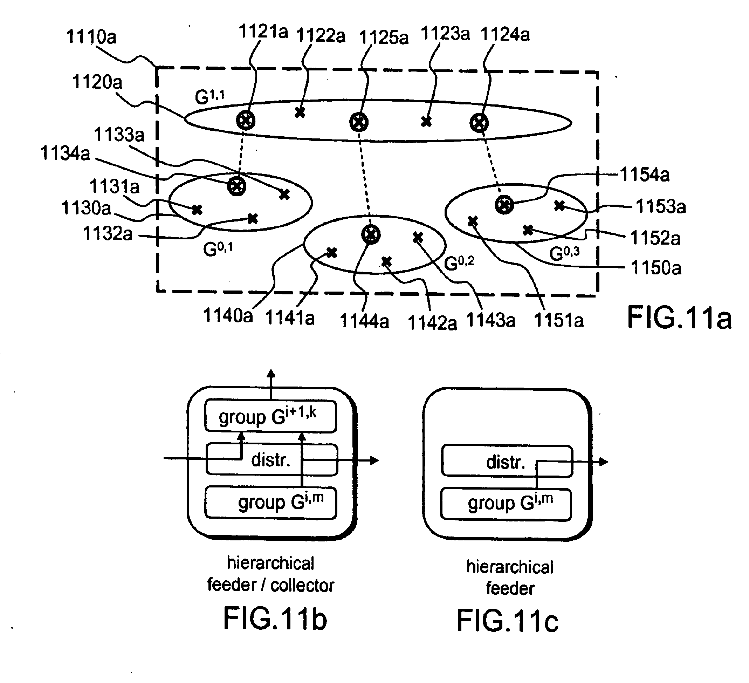

Figures 11a, 11b and 11c illustrate the cooperation of Boxes organised in groups in an embodiment of the invention.
A DSS of the invention consists of N Boxes, Box₁...Boxᵢ... Box_{N}. As already exemplified earlier in the description, the N Boxes can be organised in groups at n hierarchical levels, where the group performs Group Fusion and/or Collaborative Estimation. A number mᵢ of groups exists at each level i A group is then noted as G^{i,j} (i = 0..n-1; j = 1..mᵢ) as can be seen on figure 11a, and the number of Boxes in each group is denoted |G^{i,j}|. Such groupings are mappings on the physical set of Boxes constituting the DSS.

Figure 11.a shows a DSS, 1110a, which comprises two hierarchical levels: an upper level comprising one group only G^{1,1}, 1120a, which comprises Boxes 1121 a, 1122a, 1123a, 1124a and 1125a; and a lower level comprising three groups G^{0,1}, G^{0,2}, G^{0,3}. For instance group G^{0,1}, 1130a comprises Boxes 1131 a, 1123a, 1133a and 1134a.
A group comprises at least one Box, which acts as a gateway for the group (Group Gateway or GG). A group gateway speaks on behalf of the group in a hierarchically higher level. Therefore, GG 1134a and GG 1121 a are one and the same Box.
Figures 11b and 11c illustrate the recursive application of the said canonical mechanism to obtain inter-group operation. GGs of level i form, possibly with one or more other Boxes, a group Gi+1,k at level i+1. In Figure 11b the GGs perform the Feeder role at level i and the Collector role at level i+1. The latter is for the purpose of performing Group Fusion or Collaborative Estimation in a hierarchically manner. The GGs may also act as a hierarchical Feeder, only sending data to a higher level OC, as exemplified by Figure 11.c.
A hierarchical group structure allows excellent scalability of the system of the invention through partitioning (m x n instead of N x N communications) and layering (less data sent to higher levels).
Of course, the system of the invention may operate in a peer mode (which is a one group system). Such a system operates preferably in a distributed mode. It is highly robust but not scalable because all Boxes are active at the same time.
In addition to the scalability, due primarily to the subscription behaviour of the constituent Boxes, the system of the invention also provides excellent flexibility to the following aspects:
- group composition - the system supports both moving Boxes and moving groups, and supports dynamic group membership through spontaneous join/leave of Boxes;
- operational - both distributed and centralised operation is supported, either globally or at group level; the only requirement is that Boxes can perform both as a Feeder and Collector
- adaptability of the hierarchy of the system (reconfiguration in case of Collectors failure or operational changes; adaptation to the movements of groups)

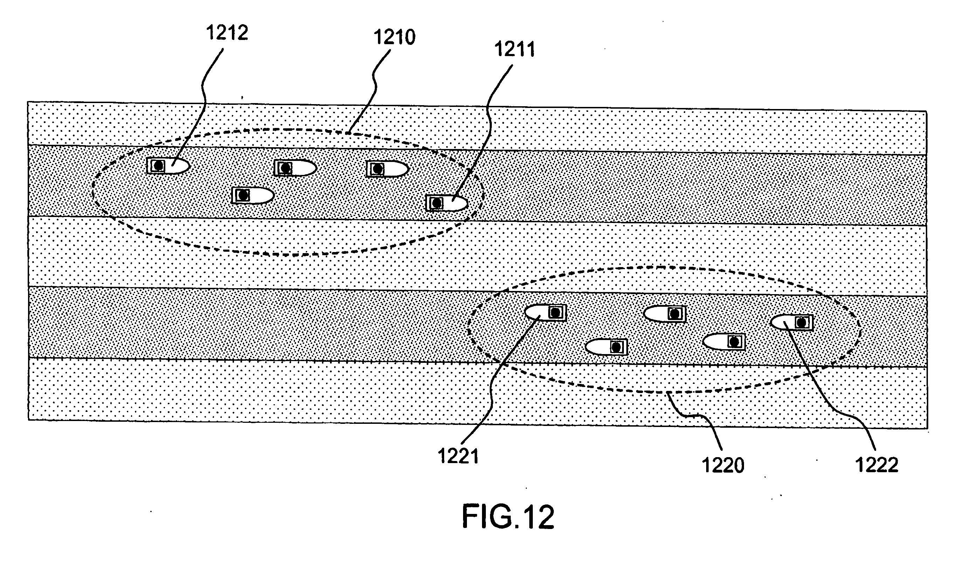

Figures 12 through 16 illustrate five Concepts of Operation (CONOPS) for counter piracy missions. They will be commented upon jointly hereunder.
A specific CONOPS defines for instance in the context of a specific mission the Project Statement, the Proposed Solution, the Proposed Support Environment, the Operating Concept and the Operational scenarios (see for example European patent application n °EP2081163 already cited). Since all the missions of protecting High-Value Units (HVUs) against piracy attack as illustrated in figures 12 through 16 have much in common, the CONOPS will mostly differ in their Operational scenarios.
Some commonalities in the CONOPSes to use this invention have already been described. The more specific features of a CONOPS of a system of the invention in the context of a counter piracy mission is now described. In the Gulf of Aden, pirates hijack commercial ships called HVU for ransom. Once pirates have boarded an HVU, the hijack is considered successful. Therefore, the counter-piracy operation aims to avoid pirates from boarding. A timely detection of an imminent piracy attack on an HVU is crucial, and the distance of the pirates to the HVU under attack at the moment of detection determines the available time to respond. This response time can be prolonged when the HVU under attack enters an evasive move the moment the imminent attack is detected.
In the Gulf of Aden an International Recommended Transit Corridor (IRTC) has been established as the preferred route to cross the Gulf. Concentrating shipping within this corridor facilitates the protection mission.
In operation Atalanta a coalition of navies provides protection to the HVUs that sail the Gulf of Aden. Using the over ten frigates in total, only intermittent and partial surveillance of the area is possible. This solution is not only inadequate, but also expensive because both the surveillance and the response capabilities reside at the frigate, and the number of frigates is dictated by the surveillance capability.
In the first example of figure 12, HVUs travel in convoys 1210, 1220. The Boxes are located on some of the HVUs, 1211, 1212, 1221, 1222. Each HVU receives a local Surveillance Picture (SP) from all other HVUs in the convoy. The scope of the Situation Awareness (SA) is each convoy. In this CONOPS, SA is improved by fusion and/or intention detection performed at convoy level, but HVUs can only respond to a threat by evasive action.

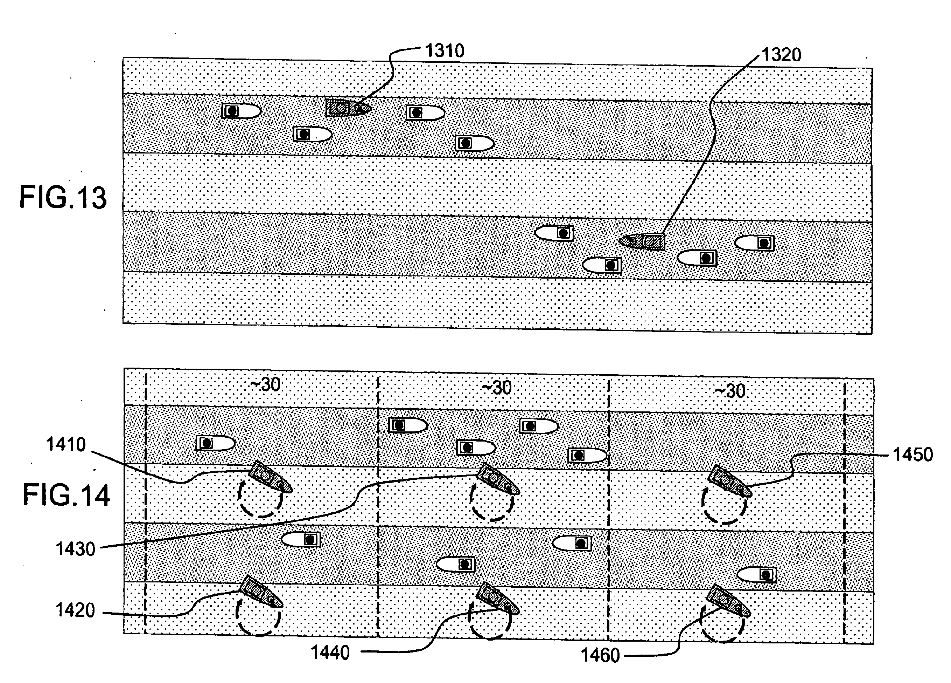

The second example of figure 13 differs from the previous one in that each convoy 1210, 1220 is accompanied by a navy ship 1310, 1320 which at the same time carries a Box and is a response platform. The navy ships get a convoy SP and the scope of their SA is their convoy. In addition to evasive maneuvers, the navy ships provide response capabilities, which are improved in comparison to solutions of the prior art by the cooperation between the nodes of each convoy.

The third example of figure 14 is a shipping lane divided in zones (each zone has been defined with a width of around 30 NM in the example of the figure by taking into consideration the required response time and the interconnectivity). There is a Box on each HVU (only some of them when the HVUs travel in convoys). At least one navy ship 1410, 1420, 1430, 1440, 1450, 1460 is responsible for a zone. They will normally not patrol too long distances to save on fuel. The scope of the SA is the zone.

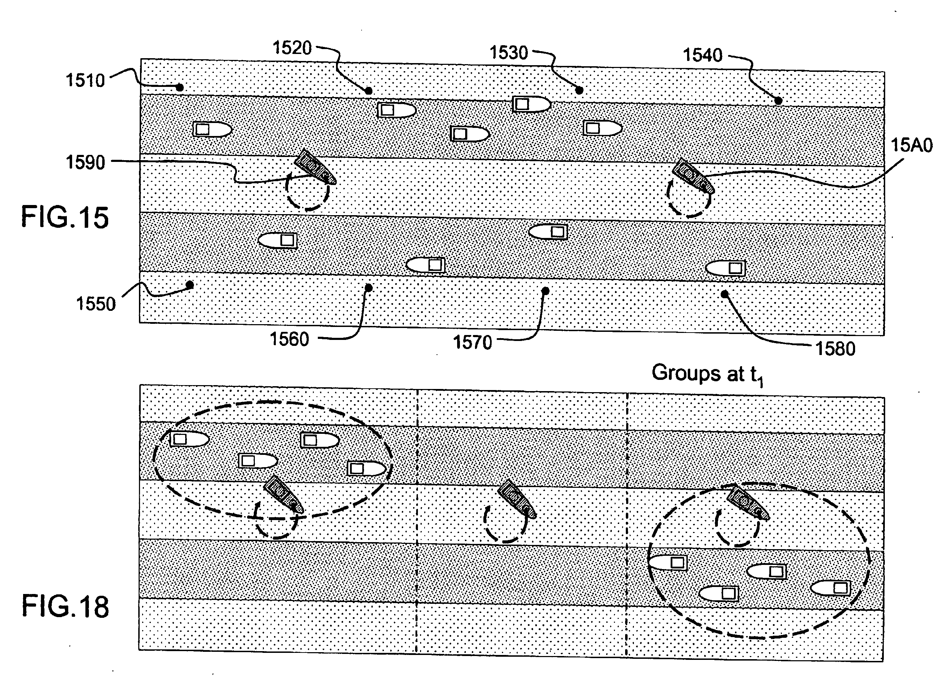

The fourth example of figure 15 is a shipping lane. In this example, fixed platforms (spar-type buoys for instance) 1510, 1520, 1530, 1540, 1550, 1560, 1570, 1580 are deployed along the lane to form a corridor. There is a Box on each platform. Navy ships 1590, 15A0 in an adequate number for a required response time are positioned within the corridor. The navy ships can respond to any incident in time. Platforms are positioned to provide early warning. The SA scope is the zone.

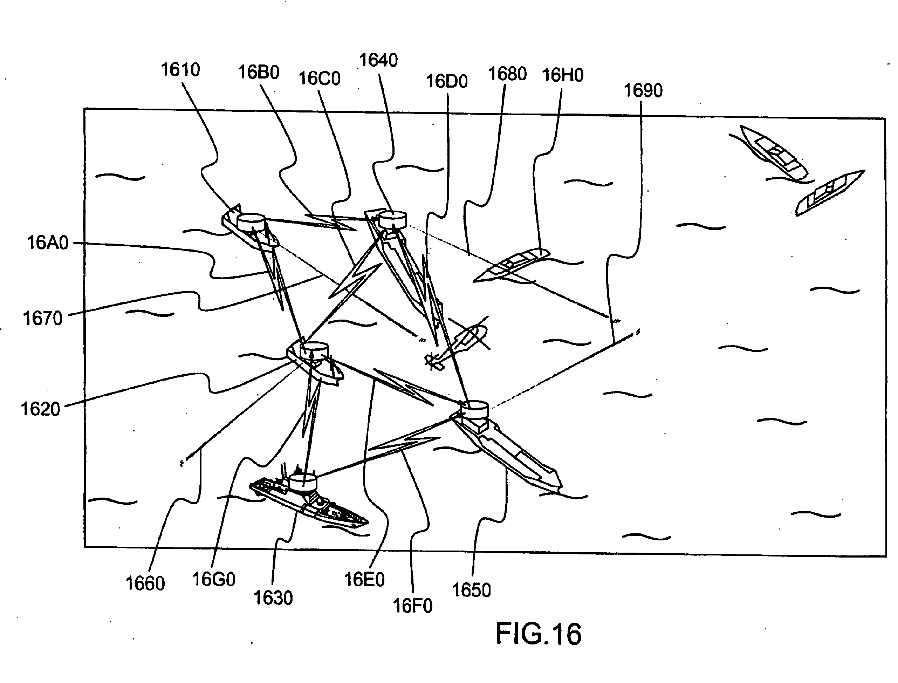

Figure 16 illustrates the CONOPS of the second example (Figure 13) in a more detailed manner. In this example, frigates are equipped with helicopters.
Shipping companies rightfully state that security at sea is the responsibility of the navies, and that they will therefore not take equipment on board to provide security. Navies, on the other hand, may claim to offer cost-effective security to the HVUs when they host capabilities for extended surveillance. Therefore, a DSS approach to counter-piracy uses the HVUs themselves as platforms for the Boxes. A convoy of HVUs then forms the extended surveillance capability. In this example, frigates that carry helicopters are used as C2 and response platforms, but now their number is solely determined by the required response time and the velocity of the used response resources. In the example of the figure, the number of frigates with helicopters is only three. The Boxes are deployed on both the HVUs 1610, 1620 and the frigates 1630, 1640,1650. The beams 16A0, 16B0, 16C0, 16D0, 16E0, 16F0, 16G0 represent the sensing capabilities and the flashes 1660, 1670, 1680, 1690 represent the communication among Boxes. The figure captures the moment where the approaching fast boat 16H0 has already been classified as a threat and the helicopter has taken off for counter measures. An alternative to frigates is to use Fast Intercept Crafts (FIC) as C2 and response platform. Due to their lower speed than the helicopters on frigates, a larger number of FICs is required. But since FICs have dramatic lower operating cost than frigates, the total C4ISR operating cost decreases significantly.

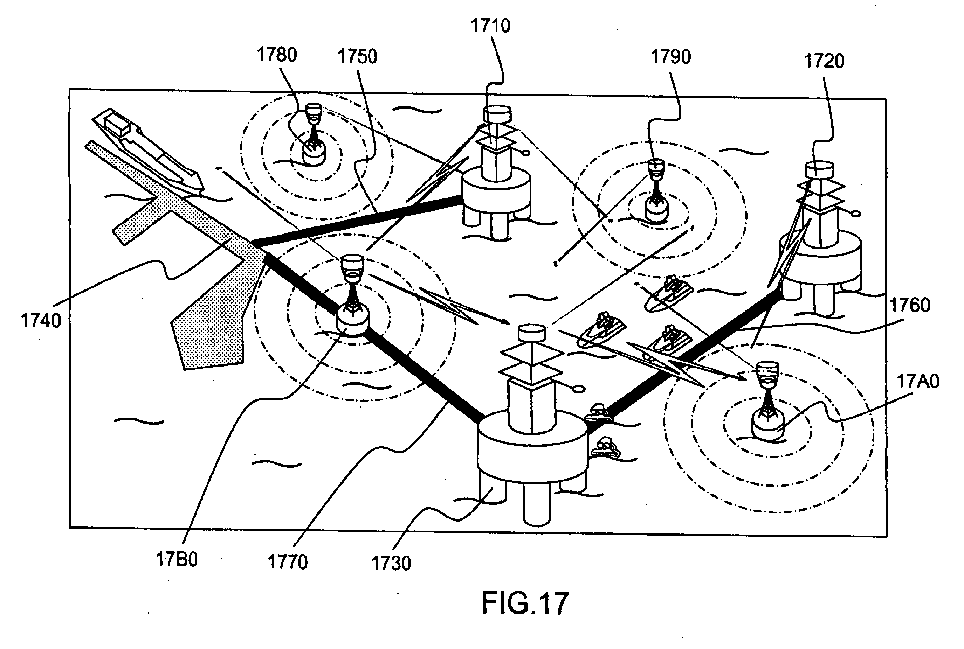

Figure 17 illustrates a fifth CONOPS for use of a DSS in an embodiment of the invention.
The scenario is the threatening of a nation's integrity due to a dispute over their natural resources. Oil fields provide the means to access these natural resources. Assume an oil field in the Arabic Gulf consisting of several oilrigs 1710, 1720, 1730, a loading terminal 1740 and oil pipes 1750, 1760, 1770 interconnecting them as displayed on the figure. Such a structure can be prone to terrorism or capture. The total area covered by an oil field can be 100x100km, which requires an extended surveillance capability for continuous and complete surveillance. Depending on the density of the oilrigs, the Boxes can be positioned on the rigs. As an alternative, Boxes can be positioned on spar-buoys 1780, 1790, 17A0, 17B0. Even a combination of rigs and buoys is possible, as shown in the figure.
Like in the illustrations of counter-piracy of figure 16, the beams indicate surveillance and the flashes indicate communication. In addition, the buoys have passive sonar indicated by the concentric circles. The threat is formed by a couple of divers suspected to sabotage an oilrig. The divers have been transported by jetski's, which have been detected by both the radar and the sonar.
FICs are chosen as C2 and response platforms (not shown in the figure). The size of the oil field and the required response time determine the number of FICs needed. Each of the FICs can 'tap' only the data from the extended surveillance capability that is relevant to its portion of the oil field. The FIC closest to the threat will take appropriate counter-measures.

To build a full CONOPS, a number of steps should be taken to determine the optimal approach both in technical and effectiveness terms:
- discern surveillance, response, early warning and complexity;
- consider number and type (stationary/moving) of platforms;
- consider coverage (full/partial) of the suspect area;
- use qualitative/relative scoring to compare the different approaches.

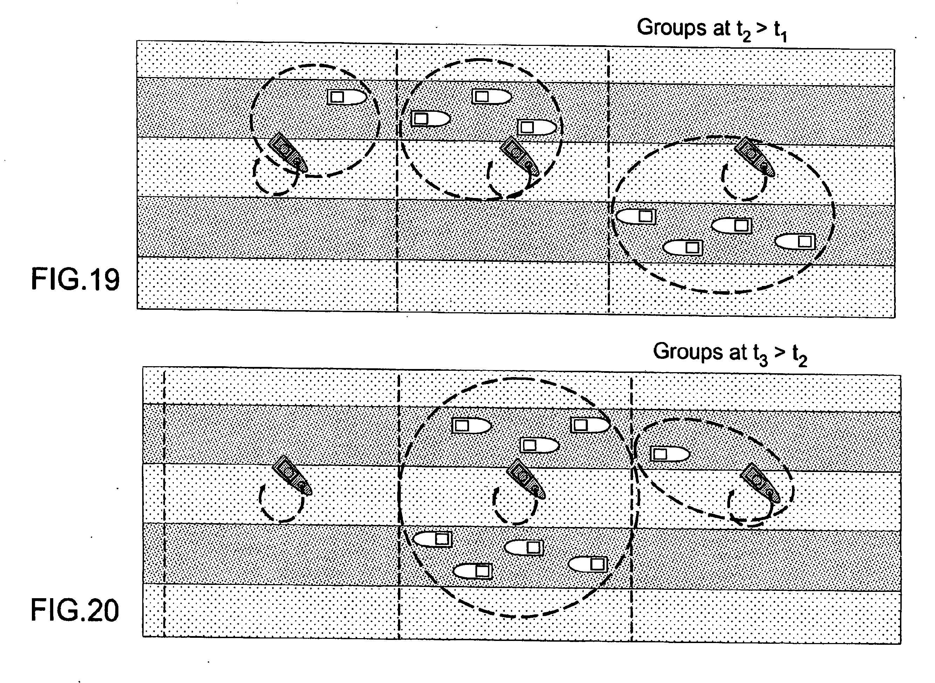

Figure 18 through 20 illustrate examples of zoning approaches by a DSS in various embodiments of the invention.
They will be commented upon jointly hereunder. A key feature of the system of the invention is to provide scalable and reconfigurable zone approaches. To provide these features, the system makes use of the underlying topology of the ad-hoc network made up by the DSS-nodes. The network as a whole remains untouched, while the application acts on subsets of the network. Important basic information for the applications is the topology database, which contains the geographic position of each node, and the type of node (surveillance, response, or both). Input for such a database can be achieved by modifying the routing process to include geo-position and node-type in the routing message exchange. The common denominator of all such applications is that the subscription behaviour of a node running an application is determined by a geographic or rule-based function of the topology:
- the protecting navy ship runs an application that filters those nodes that reside within his zone; the navy ship will subscribe to these nodes;
- there can be designated nodes that run multi-platform fusion for aggregation purposes, which results in reduced data traffic over the network; each designated node is allocated a number of feeding nodes, either by geographic filtering or by rule filtering;
- a flexible 'tap' area can be defined: a small response platform that sails through a field of DSS nodes may want to receive surveillance information within a circle around itself with a radius determined by the response time; such a circle filters the nodes the response platform has to subscribe to (= 'tap' information from); when the response platform moves through the field of nodes, the circle will move as well, and therefore also the nodes where to tap from; the subscribe/unsubscribe mechanism will ensure that the information from the nodes within the moving circles is received by the moving platform.
Figures 18 through 20 illustrate such a reconfiguration of the groups of observation nodes at three different moments in time (t₁, t₂, t₃). This capability of a DSS according to the invention has been described in the context of a zone approach, because it is there that its full potential can be more easily understood. But the capability can be of course used in all instances where it is useful, i.e., whenever a group of moving nodes needs to be formed/unformed.

The invention is not limited to the specific embodiments, which have been described in this specification. The scope of the invention is only defined by the appended claims, which follow.

## Claims

1. Distributed surveillance system comprising a group of at least a first (10i) and a second (10j) node each comprising at least two sensors (310a, 320a, 320b, 340b), a reference module (330a, 330b), a communication module (340a, 310b) configured to run a publish/subscribe process (2350) whereby said first node is configured to publish data for use by at least said second node and to subscribe to data published by at least said second node and a processing and storage module (350a, 310b) configured to produce a local operational picture from said first node data and/or a group operational picture (250) from at least some of the subscribed local/group data stored in said processing and storage module from said communication module, said system being **characterized in that** the at least first and second nodes are configured to automatically form a collaborative surveillance entity and subscribe/unsubscribe to data as a function at least of ranges defined around said nodes.

2. Distributed surveillance system according to claim 1 **characterised in that** each node comprises at least two sensors selected from a group comprising a radar, an AIS, an EO sensor, a passive sonar, a Sound Direction Finder, a Radio Direction Finder and an Electronic Support Measures (ESM).

3. Distributed surveillance system according to any one of claims 1 to 2 **characterised in that** one of the nodes is borne by an USV platform (1010a).

4. Distributed surveillance system according to claim 3 **characterised in that** said USV platform is a catamaran equipped with a telescopic mast (1040b, 1040c) bearing at least an aerial sensor and a telescopic stem (1020b, 1020c) bearing at least a sonar sensor 1030b, 1030c).

5. Distributed surveillance system according to claim 4 **characterised in that** said telescopic mast and said telescopic stem are retracted when said catamaran is in transport mode and are jointly deployed by a coupling mechanism before said sensors operate in observation mode.

6. Distributed surveillance system according to any one of claims 1 to 5 **characterised in that** said system is fit to be in communication with a command and control system (120) to command and control response capabilities (130).

7. Distributed surveillance system according to any one of claims 1 to 6 **characterised in that** said communication module comprises a LOS (211) and a NLOS link (212).

8. Distributed surveillance system according to any one of claims 1 to 7 **characterised in that**, in said publish/subscribe process, data are conveyed from data producing nodes to data consuming nodes by following a one-to-one or a one-to-many delivery tree.

9. Distributed surveillance system according to any one of claims 1 to 8 **characterised in that** said processing and storage module (350a, 310b) is further configured to run an intention detection process whereby independent pieces of evidence are fused to compute the likelihood of a hypothesis (860).

10. Distributed surveillance system according to claim 9 **characterised in that** said intention detection process uses a rule-based anomaly detection sub-process (930) to compute said pieces of evidence.

11. Distributed surveillance system according to claim10 **characterised in that** said pieces of evidence are input into a causal reasoning sub-process (950) based on Bayesian networks said causal reasoning sub-process running in the processing and storage module of one first node, being configured to receive as input the local likelihood (860) from at least a second node, and producing as output of the Bayesian network of the collaborative estimation of said first node, the group likelihood of a hypothesis.

12. Distributed surveillance system according to any one of claims 1 to 11 **characterised in that** said group (1120a) of nodes is configured to be in communication with a hierarchical structure of other groups (1130a, 1140a, 1150a) through group gateways (1121 a, 1134a; 1124a, 1154a; 1125a, 1144a).

13. Distributed surveillance method comprising a group of at least a first and a second observation processes, said processes each comprising at least two sensing sub-processes, a referencing sub-process, a communication sub-process, whereby said first observation process publishes data for use by at least said second observation process and can subscribe to data published by at least said second observation process and a computing and storage sub-process capable of producing a local operational picture from data output by said first observation process and/or a group operational picture from at least some of the data subscribed from the group stored by said processing and storage sub-process from said communication sub-process, said method being **characterized in that** at least some of the observation processes are configured to automatically form groups of collaborative surveillance processes and subscribe/unsubscribe to data within each group as a function at least of ranges defined around nodes performing the surveillance processes..

14. Distributed surveillance method according to claim 13 **characterized in that** at least some of the observation processes run on a subset of a group of vessels to be protected which navigate in an unprotected convoy.

15. Distributed surveillance method according to claim 13 **characterized in that** at least some of the observation processes run on a subset of a group of vessels to be protected and on protection vessels which sail in convoy.

16. Distributed surveillance method according to claim 13 **characterized in that** at least some of the observation processes run on vessels to be protected and on protection vessels each navigating in an area of responsibility.

17. Distributed surveillance method according to claim 13 **characterized in that** at least some of the observation processes run on protection vessels each sailing in an area of responsibility and on fixed platforms positioned in a corridor to be protected.

18. Distributed surveillance method according to any one of claims 13 to 17 **characterized in that** at least some of the observation processes are configured to use as input data from a plurality of nodes.

19. Distributed surveillance method according to claim 18 **characterized in that** at least some of said plurality of nodes subscribe to the data output by the observation processes of at least some of the other nodes among said plurality of nodes.

20. Distributed surveillance method according to claim 18 **characterized in that** at least some of said plurality of nodes feed data as input to an observation process of one single node among said plurality of nodes.

## Patentansprüche

1. Verteiltes Überwachungssystem, umfassend eine Gruppe von zumindest einem ersten Knoten (10i) und einem zweiten Knoten (10j), jeweils umfassend zumindest zwei Sensoren (310a, 320a, 320b, 340b), ein Referenzmodul (330a, 330b), ein zur Ausführung eines Veröffentlichungs-/Abonnierungsprozesses (2350) konfiguriertes Kommunikationsmodul (340a, 310b), wodurch der erste Knoten konfiguriert ist, um Daten zur Verwendung durch zumindest den zweiten Knoten zu veröffentlichen und Daten zu abonnieren, die von zumindest dem zweiten Knoten veröffentlicht werden, und ein Verarbeitungs- und Speichermodul (350a, 310b), das konfiguriert ist, um ein lokales Lagebild aus den ersten Knotendaten und/oder ein Gruppenlagebild (250) aus zumindest einigen der abonnierten lokalen/Gruppendaten, die im Verarbeitungs- und Speichermodul gespeichert sind, vom Kommunikationsmodul, zu produzieren, wobei das System **dadurch gekennzeichnet ist, dass** der zumindest erste und zweite Knoten konfiguriert sind, um automatisch eine kollaborative Überwachungsentität zu bilden und Daten zu abonnieren bzw. sich von diesen abzumelden, als Funktion zumindest von Bereichen, die um die Knoten definiert sind.

2. Verteiltes Überwachungssystem nach Anspruch 1, **dadurch gekennzeichnet, dass** jeder Knoten zumindest zwei Sensoren umfasst, die aus einer Gruppe bestehend aus Radar, AIS, EO-Sensor, passivem Sonar, Schallpeiler, Funkpeiler und Elektronischen Unterstützungsmaßnahmen (ESM) ausgewählt sind.

3. Verteiltes Überwachungssystem nach einem der Ansprüche 1 bis 2, **dadurch gekennzeichnet, dass** einer der Knoten auf einer USV-Plattform (1010a) vorhanden ist.

4. Verteiltes Überwachungssystem nach Anspruch 3, **dadurch gekennzeichnet, dass** die USV-Plattform ein Katamaran ist, der mit einem Teleskopmasten (1040b, 1040c) mit zumindest einem Antennensensor und mit einem Teleskopschaft (1020b, 1020c) mit zumindest einem Sonarsensor (1 030b, 1030c) ausgestattet ist.

5. Verteiltes Überwachungssystem nach Anspruch 4, **dadurch gekennzeichnet, dass** der Teleskopmast und der Teleskopschaft eingefahren sind, wenn sich der Katamaran im Transportmodus befindet, und gemeinsam von einem Kopplungsmechanismus ausgefahren werden, bevor die Sensoren im Beobachtungsmodus arbeiten.

6. Verteiltes Überwachungssystem nach einem der Ansprüche 1 bis 5, **dadurch gekennzeichnet, dass** das System eingerichtet ist, um mit einem Befehls- und Steuersystem (120) in Kommunikation zu stehen, um Reaktionsmöglichkeiten (130) zu befehlen und zu steuern.

7. Verteiltes Überwachungssystem nach einem der Ansprüche 1 bis 6, **dadurch gekennzeichnet, dass** das Kommunikationsmodul einen LOS-Link (211) und einen NLOS-Link (212) umfasst.

8. Verteiltes Überwachungssystem nach einem der Ansprüche 1 bis 7, **dadurch gekennzeichnet, dass** bei dem Veröffentlichungs-/Abonnierungsprozess Daten gemäß einer One-to-one- oder One-to-many-Lieferstruktur von datenproduzierenden Knoten an datenkonsumierende Knoten übertragen werden.

9. Verteiltes Überwachungssystem nach einem der Ansprüche 1 bis 8, **dadurch gekennzeichnet, dass** das Verarbeitungs- und Speichermodul (350a, 310b) ferner konfiguriert ist, um einen Intentionserkennungsprozess auszuführen, wobei unabhängige Beweisstücke kombiniert werden, um die Wahrscheinlichkeit einer Hypothese (860) zu berechnen.

10. Verteiltes Überwachungssystem nach Anspruch 9, **dadurch gekennzeichnet, dass** der Intentionserkennungsprozess einen regelbasierten Anomalieerkennungsteilprozess (930) verwendet, um die Beweisstücke zu berechnen.

11. Verteiltes Überwachungssystem nach Anspruch 10, **dadurch gekennzeichnet, dass** die Beweisstücke in einen kausalen Schlussfolgerungsteilprozess (950) auf Basis von Bayesschen Netzen eingegeben werden, wobei der im Verarbeitungs- und Speichermodul eines ersten Knotens ausgeführte kausale Schlussfolgerungsteilprozess konfiguriert ist, die lokale Wahrscheinlichkeit (860) als Eingabe von zumindest einem zweiten Knoten zu erhalten und die Gruppenwahrscheinlichkeit einer Hypothese als Ausgabe des Bayesschen Netzes der kollaborativen Schätzung des ersten Knotens zu produzieren.

12. Verteiltes Überwachungssystem nach einem der Ansprüche 1 bis 11, **dadurch gekennzeichnet, dass** die Gruppe (1120a) von Knoten konfiguriert ist, um mit einer hierarchischen Struktur anderer Gruppen (1130a, 1140a, 1150a) über Gruppengateways (1121 a, 1134a; 1124a, 1154a; 1125a, 1144a) in Kommunikation zu stehen.

13. Verteiltes Überwachungsverfahren, umfassend eine Gruppe von zumindest einem ersten und einem zweiten Beobachtungsprozess, wobei die Prozesse jeweils zumindest folgendes umfassen: zwei Erkundungsteilprozesse, einen Referenzteilprozess, einen Kommunikationsteilprozess, wobei der erste Beobachtungsprozess Daten zur Verwendung durch zumindest den zweiten Beobachtungsprozess veröffentlicht und Daten abonnieren kann, die von zumindest dem zweiten Beobachtungsprozess veröffentlicht wird, und einen Berechnungs- und Speicherteilprozess, der in der Lage ist, ein lokales Lagebild aus Daten, die vom ersten Beobachtungsprozess ausgegeben werden, und/oder ein Gruppenlagebild aus zumindest einigen der abonnierten Daten zur Gruppe, die vom Verarbeitungs- und Speicherteilprozess gespeichert werden, vom Kommunikationsteilprozess, zu produzieren, wobei das Verfahren **dadurch gekennzeichnet ist, dass** zumindest einige der Beobachtungsprozesse konfiguriert sind, um automatisch Gruppen von kollaborativen Überwachungsprozessen zu bilden und Daten innerhalb jeder Gruppe zu abonnieren bzw. sich von diesen abzumelden, als Funktion zumindest von Bereichen, die um Knoten definiert sind, die die Überwachungsprozesse ausführen.

14. Verteiltes Überwachungsverfahren nach Anspruch 13, **dadurch gekennzeichnet, dass** zumindest einige der Beobachtungsprozesse auf einer Teilmenge einer Gruppe von zu schützenden Schiffen, die in einem ungeschützten Konvoi navigieren, ausgeführt werden.

15. Verteiltes Überwachungsverfahren nach Anspruch 13, **dadurch gekennzeichnet, dass** zumindest einige der Beobachtungsprozesse auf einer Teilmenge einer Gruppe von zu schützenden Schiffen und auf Schutzschiffen, die im Konvoi fahren, ausgeführt werden.

16. Verteiltes Überwachungsverfahren nach Anspruch 13, **dadurch gekennzeichnet, dass** zumindest einige der Beobachtungsprozesse auf zu schützenden Schiffen und auf Schutzschiffen ausgeführt werden, die jeweils in einem Verantwortungsbereich navigieren.

17. Verteiltes Überwachungsverfahren nach Anspruch 13, **dadurch gekennzeichnet, dass** zumindest einige der Beobachtungsprozesse auf Schutzschiffen, die jeweils in einem Verantwortlichkeitsbereich fahren, und auf fixen Plattformen, die in einem zu schützenden Korridor positioniert sind, ausgeführt werden.

18. Verteiltes Überwachungsverfahren nach einem der Ansprüche 13 bis 17, **dadurch gekennzeichnet, dass** zumindest einige der Beobachtungsprozesse konfiguriert sind, um Eingabedaten von einer Mehrzahl von Knoten zu verwenden.

19. Verteiltes Überwachungsverfahren nach Anspruch 18, **dadurch gekennzeichnet, dass** zumindest einige der Mehrzahl von Knoten die Daten abonnieren, die von den Beobachtungsprozessen zumindest einiger der anderen Knoten der Mehrzahl von Knoten ausgegeben werden.

20. Verteiltes Überwachungsverfahren nach Anspruch 18, **dadurch gekennzeichnet, dass** zumindest einige der Mehrzahl von Knoten Daten als Eingabe an einen Beobachtungsprozess eines einzelnen Knotens der Mehrzahl von Knoten zuführen.

## Revendications

1. Système distribué de surveillance comprenant un groupe d'au moins un premier (10i) et un second (10j) noeud, comprenant chacun au moins deux capteurs (310a, 320a, 320b, 340b), un module de référence (330a, 330b), un module de communication (340a, 310b) configuré pour exécuter un processus de publication/abonnement (2350) en vertu duquel ledit premier noeud est configuré pour publier des données destinées à être utilisées par au moins ledit second noeud et pour s'abonner à des données publiées par au moins ledit second noeud et un module de traitement et de stockage (350a, 310b) configuré pour générer une image opérationnelle locale à partir desdites données du premier noeud et/ou une image opérationnelle de groupe (250) à partir d'au moins certaines des données locales/de groupe d'abonnement stockées dans ledit module de traitement et de stockage depuis ledit module de communication, ledit système étant **caractérisé en ce que** les au moins premier et second noeuds sont configurés pour former automatiquement une entité de surveillance collaborative et s'abonner /se désabonner à des données en fonction d'au moins des plages définies autour desdits noeuds.

2. Système distribué de surveillance selon la revendication 1, **caractérisé en ce que** chaque noeud comprend au moins deux capteurs choisis dans un groupe comprenant un radar, un AIS, un capteur électro-optique, un sonar passif, un goniomètre sonore, un radiogoniomètre et des mesures de soutien électronique (ESM).

3. Système distribué de surveillance selon l'une quelconque des revendications 1 à 2, **caractérisé en ce que** l'un des noeuds est porté par une plate-forme USV (1010a).

4. Système distribué de surveillance selon la revendication 3, **caractérisé en ce que** ladite plate-forme USV est un catamaran équipé d'un mât télescopique (1040b, 1040c) portant au moins un capteur d'antenne et un tube télescopique (1020b, 1020c) portant au moins un capteur sonar (1 030b, 1030c).

5. Système distribué de surveillance selon la revendication 4, **caractérisé en ce que** ledit mât télescopique et ledit tube télescopique sont rétractés lorsque ledit catamaran est en mode transport et sont conjointement déployés grâce à un mécanisme de couplage avant que lesdits capteurs ne fonctionnent dans le mode d'observation.

6. Système distribué de surveillance selon l'une quelconque des revendications 1 à 5, **caractérisé en ce que** ledit système est adapté pour être en communication avec un système de commande et de contrôle (120) pour commander et contrôler les capacités de réponse (130).

7. Système distribué de surveillance selon l'une quelconque des revendications 1 à 6, **caractérisé en ce que** ledit module de communication comprend une liaison LOS (211) et une liaison NLOS (212).

8. Système distribué de surveillance selon l'une quelconque des revendications 1 à 7, **caractérisé en ce que**, dans ledit processus de publication/abonnement, les données sont acheminées depuis les noeuds producteurs de données vers les noeuds consommateurs de données en suivant une arborescence de distribution biunivoque ou injective.

9. Système distribué de surveillance selon l'une quelconque des revendications 1 à 8, **caractérisé en ce que** ledit module de traitement et de stockage (350a, 310b) est en outre configuré pour exécuter un processus de détection d'intention dans lequel des éléments de preuve indépendants sont fusionnés pour calculer la probabilité d'une hypothèse (860).

10. Système distribué de surveillance selon la revendication 9, **caractérisé en ce que** ledit processus de détection d'intention utilise un sous-processus de détection d'anomalies à base de règles (930) pour calculer lesdits éléments de preuve.

11. Système distribué de surveillance selon la revendication 10, **caractérisé en ce que** lesdits éléments de preuve sont entrés dans un sous-processus de raisonnement causal (950) basé sur des réseaux de Bayes, ledit sous-processus de raisonnement causal s'exécutant dans le module de traitement et de stockage d'un premier noeud et étant configuré pour recevoir comme entrée la probabilité locale (860) d'au moins un second noeud et produisant comme sortie du réseau de Bayes de l'estimation collaborative dudit premier noeud, la probabilité de groupe d'une hypothèse.

12. Système distribué de surveillance selon l'une quelconque des revendications 1 à 11, **caractérisé en ce que** ledit groupe (1120a) de noeuds est configuré pour être en communication avec une structure hiérarchique d'autres groupes (1130a, 1140a, 1150a) par le biais de passerelles de groupes (1121 a, 1134a ; 1124a, 1154a ; 1125a, 1144a).

13. Procédé de surveillance distribué comprenant un groupe d'au moins un premier et un second processus d'observation, lesdits processus comprenant chacun au moins deux sous-processus de détection, un sous-processus de référencement, un sous-processus de communication, en vertu desquels ledit premier processus d'observation publie des données destinées à être utilisées par au moins ledit second processus d'observation et peut s'abonner à des données publiées par au moins ledit second processus d'observation et un sous-processus de calcul et de stockage capable de générer une image opérationnelle locale à partir de données produites par ledit premier processus d'observation et/ou une image opérationnelle de groupe à partir d'au moins certaines des données d'abonnement provenant du groupe stocké par ledit sous-processus de traitement et de stockage dudit sous-processus de communication, ledit procédé étant **caractérisé en ce qu'**au moins certains des processus d'observation sont configurés pour former automatiquement des groupes de processus de surveillance collaborative et pour s'abonner/se désabonner à des données à l'intérieur de chaque groupe en fonction d'au moins des plages définies autour de noeuds exécutant les processus de surveillance.

14. Procédé de surveillance distribué selon la revendication 13, **caractérisé en ce qu'**au moins certains des processus d'observation s'exécutent sur un sous-ensemble d'un groupe de navires à protéger qui naviguent dans un convoi non protégé.

15. Procédé de surveillance distribué selon la revendication 13, **caractérisé en ce qu'**au moins certains des processus d'observation s'exécutent sur un sous-ensemble d'un groupe de navires à protéger et sur des navires de protection qui naviguent en convoi.

16. Procédé de surveillance distribué selon la revendication 13, **caractérisé en ce qu'**au moins certains des processus d'observation s'exécutent sur des navires à protéger et sur des navires de protection navigant chacun dans une zone de responsabilité.

17. Procédé de surveillance distribué selon la revendication 13, **caractérisé en ce qu'**au moins certains des processus d'observation s'exécutent sur des navires de protection navigant chacun dans une zone de responsabilité et sur des plates-formes fixes positionnées dans un couloir devant être protégé.

18. Procédé de surveillance distribué selon l'une quelconque des revendications 13 à 17, **caractérisé en ce qu'**au moins certains des processus d'observation sont configurés pour utiliser des données d'entrée issues d'une pluralité de noeuds.

19. Procédé de surveillance distribué selon la revendication 18, **caractérisé en ce qu'**au moins certains de ladite pluralité de noeuds s'abonnent aux données générées grâce aux processus d'observation d'au moins certains des autres noeuds parmi ladite pluralité de noeuds.

20. Procédé de surveillance distribué selon la revendication 18, **caractérisé en ce qu'**au moins certains de ladite pluralité de noeuds envoient des données sous forme d'entrée à un processus d'observation d'un seul noeud parmi ladite pluralité de noeuds.
